# EUROPÄISCHE PATENTANMELDUNG

(11) **EP 3 597 089 A2**
(43) Veröffentlichungstag der Anmeldung: **22.01.2020**
(21) Anmeldenummer: 19196167.1
(22) Anmeldetag: 30.05.2018
(51) Int. Cl.: A47J 43/12, A47J 29/02, A23L 5/10, A23L 15/00, A47J 31/44, A47J 27/16

(54) **VORRICHTUNG ZUR FETTFREIEN ZUBEREITUNG PORTIONIERTER MENGEN AN RÜHREI**

(30) Priorität: 19.01.2018 DE 102018200890
(62) Teilanmeldung aus: 18740724.2
(71) Anmelder: SCRAEGG GMBH, 69168 Wiesloch (DE)
(72) Erfinder: Leonhard, Andreas, 68548 Ilvesheim (DE); Hofbauer, Florian, 69226 Nußloch (DE)
(74) Vertreter: Patent- und Rechtsanwälte Ullrich & Naumann

(57) **Zusammenfassung**

Eine Vorrichtung zur fettfreien Zubereitung portionierter Mengen an Rührei oder Rühreivarianten durch Aufschäumen von Eimasse, insbesondere Frischei, Vollei bzw. Flüssigei oder vorgefertigter Eimixturen mit Gewürzen und Zutaten, umfasst
- ein Gehäuse,
- ein im Gehäuse angeordneten elektrischen Dampfgenerator,
- ein mit dem Dampfgenerator strömungsverbundenen, innerhalb oder außerhalb des Gehäuses angeordneten Anschluss an eine Wasserquelle oder einen Wassertank,
- eine vorzugsweise im Strömungspfad zwischen der
Wasserquelle bzw. dem Wassertank und dem Dampfgenerator angeordnete elektrische Pumpe,
- vorzugsweise ein Überdruckventil,
- mindestens eine außerhalb des Gehäuses angeordneten Lanze mit endseitiger Düse zum Entladen des im Dampfgenerator erzeugten Wasserdampfes in ein die portionierte Eimasse enthaltendes Behältnis, und
- eine Steuer-/Regelungseinrichtung zur Temperatur- Druck- und Zeitsteuerung oder entsprechenden Regelung.

## Beschreibung

Die Erfindung betrifft eine Vorrichtung zur fettfreien Zubereitung portionierter Mengen an Rührei oder Rühreivarianten.

Rührei ist als Eierspeise ein einfaches Gericht aus Eiern, welches herkömmlicherweise in einer Pfanne gegart wird. Zur Zubereitung werden rohe Eier aufgeschlagen, verquirlt, gesalzen und unter Hitze in Butter oder Pflanzenöl gestockt. Oft werden die geschlagenen Eier noch mit etwas Milch, Sahne, Wasser oder Creme Fraiche vermischt, um das Rührei cremiger und lockerer zu machen. Alternativ können die Eier direkt in eine Pfanne mit zerlassener Butter geschlagen oder während des Garens mit anderen Zutaten vermischt werden. Je nach Vorliebe wird durch Rühren, Wenden oder Schaben mit einem Pfannenwender die Eimasse gleichmäßig gegart. Durch dauerhafte Bewegung des Rühreis erhält es eine cremige Konsistenz. Durch selteneres Rühren ergeben sich größere Stücke und eine festere Konsistenz.

Wenngleich es sich bei Rührei um ein einfaches Gericht handelt, ist das Kochen/Garen von Rührei aufwändig, insbesondere dann, wenn Rührei für mehrere Personen, beispielsweise im Gastronomiebetrieb, gekocht werden soll. Außerdem ist die Reproduzierbarkeit eines identischen Erscheinungsbildes und einer identischen Rühreiqualität schwierig, zumal sie von der Pfannentemperatur, der Menge und Qualität von Fett/Öl, etc. abhängt. Des Weiteren ist es gerade beim Kochen in herkömmlichen Pfannen erforderlich, hinreichend viel Fett zu verwenden, um ein Anbrennen am Pfannenboden zu vermeiden. Die Verwendung von übermäßig viel Fett steht jedoch einer gesundheitsbewussten Ernährung entgegen. Dies gilt insbesondere in Bezug auf Cholesterin.

Aus der Praxis sind unterschiedliche Vorrichtungen zum Garen von Rührei bekannt, beispielsweise ein sogenannter vertikaler Eierkocher zur Erzeugung von "Ei am Stiel". Hier wird die Rühreimasse in ein sich vertikal erstreckendes Gefäß gegeben und darin - an einem nach oben herausragenden Stiel - gekocht oder gegrillt. Hier ist nachteilig, dass regelmäßig ein vertikaler Dichtegradient der gekochten Eimasse entsteht. Außerdem arbeitet ein solcher Rühreikocher für den Gastronomiebereich viel zu langsam und ist daher ungeeignet.

Aus der Praxis ist es auch bereits bekannt, geschlagenes Rührei, beispielsweise in einer Tasse, in ein Mikrowellengerät zu geben. Das Garen des Rühreis erfolgt in knapp über einer Minute, wobei das Produkt nicht selten unansehnlich und/oder das fertige Rührei zu fest ist.

Der vorliegenden Erfindung liegt nun die Aufgabe zugrunde, eine Vorrichtung zur fettfreien Zubereitung portionierter Mengen an Rührei oder Rühreivarianten anzugeben, bei der die Eimasse, insbesondere Frischei, Vollei bzw. Flüssigei oder vorgefertigte Eimixturen, enthaltend Gewürze oder geeignete Zutaten, locker aufgeschäumt werden.

Mit der erfindungsgemäßen Vorrichtung soll es möglich sein, Rührei fettfrei zuzubereiten, wobei das Rührei, nach dem Garen, eine lockere, schaumartige bzw. luftige Substanz sein soll. Außerdem soll es möglich sein, bei identischer Eimasse bzw. Eimixtur ein reproduzierbares Ergebnis zu erzielen, so dass sich die Vorrichtung sowohl für den privaten Betrieb als auch für die Gastronomie, bei hinreichend großem Durchsatz, eignet.

Der Erfindung liegt die grundsätzliche Idee zugrunde, die Eimasse, insbesondere Frischei, Vollei bzw. Flüssigei oder vorgefertigte Eimixturen, ggf. bereits Gewürze und Zutaten enthaltend, ohne weitere Vorarbeiten durch Aufschäumen zu einem Rühreigericht zu verarbeiten bzw. zu garen.

Der Vorgang des Aufschäumens erfolgt dadurch, dass die Eimasse mit Gas bzw. Luft durchmischt wird, im Konkreten mit Wasserdampf. Das durch Dampf aufgeschäumte Ei ist wesentlich cholesterinärmer als das im Fett gebratene Ei.

Im Lichte der voranstehenden Ausführungen ist die zugrundeliegende Aufgabe durch die Merkmale des Anspruchs 1 gelöst. Danach dient die erfindungsgemäße Vorrichtung zur fettfreien Zubereitung portionierter Mengen an Rührei oder Rühreivarianten durch Aufschäumen von Eimasse, insbesondere Frischei, Vollei bzw. Flüssigei oder vorgefertigte Eimixturen mit Gewürzen und Zutaten. Dazu umfasst die Vorrichtung ein Gehäuse mit den wesentlichen Funktionsgruppen. Im Gehäuse ist ein elektrisch arbeitender Dampfgenerator angeordnet, der zur Bereitstellung von Wasserdampf dient.

Der Dampfgenerator wird automatisch mit Wasser gefüllt, wobei dazu ein vorzugsweise außerhalb des Gehäuses bzw. am Gehäuse angeordneter Anschluss zum Anschließen an eine Wasserquelle vorgesehen ist. Alternativ oder ergänzend kann innerhalb oder außerhalb des Gehäuses ein Wassertank vorgesehen sein, der im Rahmen einer einfachen Ausführung per Hand mit Wasser gefüllt wird. Von dort aus wird der Dampfgenerator, vorzugsweise über eine Pumpe, mit Wasser versorgt.

Die Pumpe ist im Strömungspfad zwischen der Wasserquelle bzw. dem Wassertank und dem Dampfgenerator angeordnet. Pumpen unterschiedlicher Bauart lassen sich hier verwenden.

Vorzugsweise ist mindestens ein Überdruckventil vorgesehen, so dass sowohl im Dampfgenerator als auch dampfseitig im Leitungssystem jedweder Überdruck vermieden wird.

Außerhalb des Gehäuses ist mindestens eine Lanze vorgesehen, die endseitig eine Düse zum Entladen des im Dampfgenerator erzeugten Wasserdampfes in ein die portionierte Eimasse enthaltendes Behältnis aufweist. Zur gleichzeitigen Herstellung zweier Portionen an Rührei sind zwei Lanzen nebeneinander mit Abstand zueinander angeordnet, exakt so weit zueinander beabstandet, dass zwei Behältnisse nebeneinander, um die jeweilige Lanze herum, positionierbar sind. Die Lanze ist über eine temperaturbeständige Hochdruckleitung, ggf. unter Zwischenschaltung von Ventilen, mit dem Dampfgenerator strömungsverbunden.

Es ist von weiterem Vorteil, wenn in der vom Dampfgenerator zur Lanze führenden Leitung, d.h. zwischen dem Dampfgenerator und der Lanze, oder an bzw. im oberen Bereich der Lanze, ein Bypass für Luft vorgesehen ist, die gegebenenfalls über ein Bypassventil in das Leitungssystem hineingezogen bzw. von der Dampfströmung mitgerissen wird. Somit vermengt sich der Wasserdampf mit Luft, wodurch es möglich ist, die Eimasse äußerst locker zu gestalten. Über die Regelung der in das System einströmenden Luft ist die Konsistenz des Rühreis beeinflussbar. Des Weiteren ist eine Steuer-/Regelungseinrichtung zur Temperatur-, Druck- und Zeitsteuerung oder eine entsprechende Regelung vorgesehen, wonach auf Anforderung heißer Dampf über die Lanze auslassbar ist. Entsprechend der Menge der zu garenden Eimasse und entsprechend des gewünschten Resultats kann die Zeitsteuerung und ggf. der Druck beeinflusst werden. Wesentlich ist, dass die Lanze automatisch arbeitet, dass nämlich der Auslass von Dampf entsprechend der Steuerung automatisch stoppt, wenn unter Berücksichtigung des Volumens der zuzubereitenden Eimasse und der Temperatur die Beendigung des Fertigungsprozesses detektiert und berechnet wird.

An dieser Stelle sei angemerkt, dass es sich bei den zuvor genannten Merkmalen um die wesentlichen Merkmale der erfindungsgemäßen Vorrichtung handelt, die ähnlich den Funktionsgruppen einer herkömmlichen Kaffeemaschine mit Dampflanze ergänzt bzw. erweitert werden können, nämlich entsprechend den konkreten Anforderungen.

In vorteilhafter Weise hat die Lanze am freien Ende oder nahe dem freien Ende mindestens eine Öffnung, vorzugsweise mehrere über den Umfang der Lanze verteilte Öffnungen, um nämlich den Vorgang des Aufschäumens durch allseitig austretenden Wasserdampf zu begünstigen. Die Öffnungen sind in vorteilhafter Weise derart gerichtet, dass beim Austreten eine Art rollierende Strömung bzw. Verwirbelung entsteht, im Gegensatz zu einer kreisringförmigen Verwirbelung. Die rollierende Verwirbelung mit einer Drehachse quer bzw. orthogonal zur Längsachse der Lanze bewirkt ein optimales Ausströmen des Dampfes und ein Erfassen der gesamten Eimasse mit dem Ergebnis einer vergleichmäßigten Zubereitung im gesamten Behältnis. Letztendlich geht es darum, den Vorgang des Garens mittels Wasserdampf so schnell wie möglich und über das gesamte Behältnis hinweg durchzuführen, was sich insbesondere im gastronomischen Betrieb als vorteilhaft erweist.

Auch ist es denkbar, dass mehrere Lanzen mit unterschiedlich gestalteten Düsen zum Austausch vorgesehen sind, wobei die Lanzen an einen Lanzenkopf, als Verteiler für den Wasserdampf ausgestaltet, ansteckbar und arretierbar, vorzugsweise mittels Bajonettanschluss oder Schraubanschluss festlegbar sind. Das Austauschen der Lanzen kann zum Erreichen unterschiedlicher Aufschäumergebnisse, vor allem aber zum Austausch zwecks Reinigung erfolgen.

Des Weiteren ist es denkbar, dass die Lanze, zumindest teilweise, mit einer temperaturbeständigen Anti-Haft-Beschichtung versehen ist, so dass sich der Reinigungsprozess erleichtert. Die elektronische Steuerung kann ein Reinigungsprogramm umfassen, so dass nach jedem Aufschäumvorgang ein Reinigungsprozess durch Auslassen von Dampf, vorzugsweise unter höherem Druck als beim Aufschäumen, erfolgt. Der Reinigungsvorgang kann nach jedem Aufschäumen oder nach einer vorgebbaren Anzahl von Aufschäumvorgängen erfolgen.

Unterhalb der Lanze, mit hinreichendem Abstand zur Lanze, ist in weiter vorteilhafter Weise ein Halter zum Positionieren und/oder Halten des Behältnisses oder der Behältnisse vorgesehen. Der Halter kann von außerhalb des Lanzenbereichs in den Lanzenbereich schwenkbar ausgestaltet sein. Außerdem ist es von Vorteil, wenn der Halter - automatisch oder per Hand - vertikal bewegbar ist, um nämlich das Behältnis in die Arbeitsposition der Lanze zu verbringen und nach dem Aufschäumen das Behältnis aus dem Lanzenbereich abzusenken, um nämlich den Behälter mit dem aufgeschäumten Rührei entnehmen zu können. Bei Vorkehrung zweier Lanzen ist der Halter entsprechend für zwei Behältnisse oder für ein großes Behältnis ausgebildet.

Sofern es sich bei dem Halter um ein Funktionselement zur hängenden Aufnahme des Behälters handelt, kann das Behältnis beispielsweise in Form eines Bechers per Schraub- oder Bajonettanschluss hängend unter bzw. teilweise um die Lanze herum positionierbar sein. Auch ist es denkbar, dass der Halter gabelartig ausgebildet ist, so dass sich das Behältnis in den Freiraum zwischen den Zinken einhängen lässt. Beliebige weitere Ausgestaltungen sind denkbar.

Sowohl außerhalb als auch innerhalb des Gehäuses kann ein Tank zur Bevorratung und zum Dosieren der Eimasse vorgesehen sein. Die Vorkehrung eines solchen Tanks ist dann von besonderem Vorteil, wenn Vollei bzw. Flüssigei verwendet wird, wie es im kommerziellen Bereich angeboten wird. Der Tank kann über eine Klappe bzw. einen Schacht befüllt werden und ist zu Reinigungszwecken entnehmbar. Bei Verwendung eines solchen Tanks ist es von weiterem Vorteil, wenn die Dosierung über eine separate Sonde unmittelbar in das Behältnis hinein erfolgt, wobei diese Sonde auch außerhalb der eigentlichen Bearbeitungsposition, d.h. abseits der zum Aufschäumen dienenden Lanze, angeordnet sein kann.

Die Dosierung erfolgt nach Gewicht oder Volumen, wobei die Gewichtsermittlung unter Berücksichtigung des Gewichts des Behältnisses oder aber auch nach Augenmaß unter Berücksichtigung einer im Behältnis vorgesehenen Markierung erfolgen kann.

In weiter vorteilhafter Weise ist die Menge bzw. Masse der in das Behältnis dosierten Eimasse auf einem Display anzeigbar und vorzugsweise in der Summe addierbar, so dass innerhalb eines vorgebbaren Zeitraums die Gesamtmenge der ausgebrachten Eimasse nachvollziehbar ist. Auch ist es denkbar, dass die diesbezüglichen Kalorien bei bekannter Eimasse angezeigt werden, beispielsweise die Menge der Kalorien pro Ausbringung und somit auch pro Füllung des Behältnisses. Unterschiedlich große Behältnisses sind mit unterschiedlichen Mengen an Eimasse füllbar, wodurch sich die Anzeige sowohl in Bezug auf die Masse als auch in Bezug auf die Kalorien ändert. Eine automatische Anpassung ist somit vorgesehen.

Innerhalb oder außerhalb des Gehäuses kann außerdem ein Spender für Salz, Pfeffer und ggf. für weitere Gewürze vorgesehen sein, der nach Wahl der zu dosierenden Menge, vor der Dampfbehandlung, unmittelbar in das Behältnis hinein dosiert. Die Dosierung kann gleichzeitig bzw. parallel mit der Dosierung der Eimasse erfolgen. Auch ist es denkbar, dass die Dosierung von Salz, Pfeffer, etc. in die im Behältnis befindliche Eimasse hinein erfolgt, und zwar vor der Dampfbehandlung.

Des Weiteren ist es von Vorteil, wenn der jeweilige/momentane Betriebszustand, Wasserstand, etc. visuell und/oder akustisch, vorzugsweise über LEDs und/oder ein Display, angezeigt wird. Durch diese Maßnahme ergibt sich ein Bedienkomfort, der insbesondere zur einfachen und transparenten Handhabung der Vorrichtung dient.

Voreingestellte Bearbeitungsparameter können in Programmen zusammengefasst sein, die sich über Tasten und/oder ein Display, vorzugsweise über ein Touch-Panel, auswählen lassen. Auch ist denkbar, dass die Masse der aufzuschäumenden Eimasse ermittelt und sich das jeweilige Programm automatisch an die zu behandelnde Masse mit den jeweiligen Betriebsparametern anpasst. Ein automatischer Betrieb der Vorrichtung ist dadurch möglich.

Die Vorrichtung kann außerdem einen Prozessor, einen Datenspeicher und ein Kommunikationsmodul mit Netzwerkanschluss umfassen, wobei das Kommunikationsmodul insbesondere zur Datenkopplung über einen LAN- und/oder WLAN- und/oder Bluetooth-Anschluss erfolgt. Die Datenkommunikation lässt sich insbesondere über das Internet und vorzugsweise über Bluetooth und ein Smartphone bewerkstelligen, so dass es denkbar ist, die gesamte Vorrichtung über eine auf dem Smartphone zu installierende App zu bedienen bzw. zu steuern. Dadurch lässt sich ein optimaler Bedienkomfort schaffen, wobei die Betriebsparameter, Füllstände, etc. auf dem Display des Smartphones visualisiert werden.

So kann der Prozessor oder das Smartphone beispielsweise ein Programm zur Lagerhaltung aller Verbrauchsmaterialien, insbesondere der Eimasse, der Gewürze, etc., umfassen, über das beispielsweise auch ein automatisches Bestellwesen der Verbrauchsmaterialien, vorzugsweise über das Internet, aktivierbar ist. Eine solche Vorkehrung ist insbesondere im gewerblichen Bereich von Vorteil.

Schließlich ist es unter gestalterischen Gesichtspunkten von Vorteil, wenn die Geometrie des Gehäuses einen Hinweis auf das zu verarbeitenden Produkt enthält. So ist es denkbar, dass das Gehäuse in etwa die Form eines im Sockelbereich abgeflachten Eis oder eines Eis in einem Eierbecher hat. Beliebige andere Gestaltungen sind denkbar.

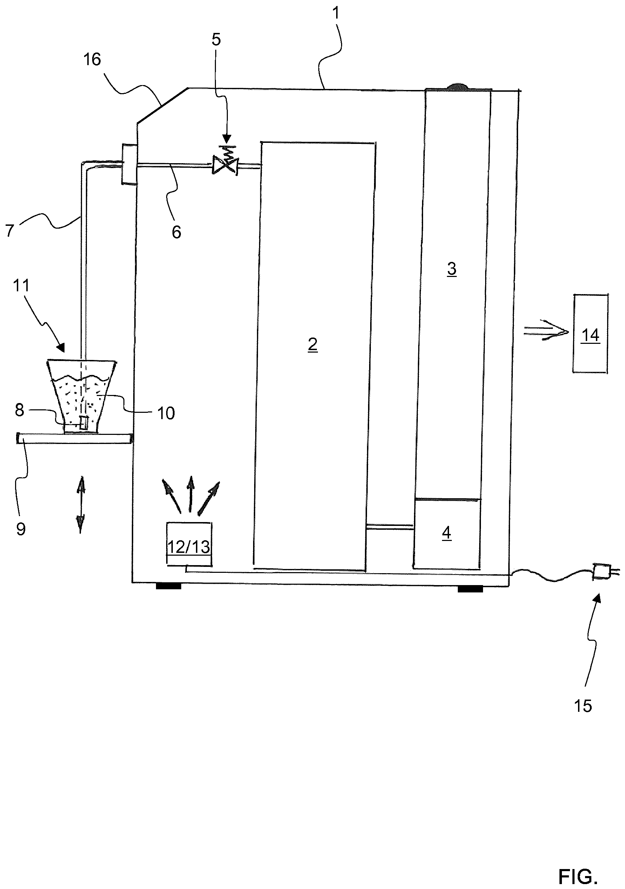

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die
- einzige Fig.: in einer Prinzipskizze, schematisch, eine erfindungsgemäße Vorrichtung mit den wesentlichen Bauteilen/Funktionsgruppen.

Die einzige Fig. zeigt in einer schematischen Ansicht, von der Seite her, ein Ausführungsbeispiel einer erfindungsgemäßen Vorrichtung zur fettfreien Zubereitung portionierter Mengen an Rührei, wobei die Zubereitung durch Aufschäumen von Eimasse, Frischei, Vollei, Eimixturen, etc. erfolgt.

Die Vorrichtung umfasst ein Gehäuse 1, von den Ausmaßen ähnlich wie bei einer handelsüblichen vollautomatischen Kaffeemaschine.

Innerhalb des Gehäuses ist ein elektrischer Dampfgenerator 2 angeordnet, der zur Herstellung von Wasserdampf dient. Der Dampfgenerator 2 ist - bei dem hier gewählten Ausführungsbeispiel - mit einem Wassertank 3 strömungsverbunden, wobei das Befüllen des Dampfgenerators 2 über eine Pumpe 4 erfolgen kann. Bei der Pumpe 4 kann es sich beispielsweise um eine Schwingungspumpe oder Membranpumpe handeln.

Die einzige Figur zeigt des Weiteren, dass in den Dampfgenerator 2 entweder ein Überdruckventil integriert und/oder dem Dampfgenerator 2 ein Überdruckventil 5 nachgeschaltet ist, um beim Verstopfen der Dampf-Auslassleitung 6 ein Überdruck im Leitungssystem zu vermeiden. Die Dampf-Auslassleitung 6 führt durch die Wand des Gehäuses 1 hindurch nach außen und mündet in eine Lanze 7 mit endseitiger Düse 8 bzw. Düsenkopf. Die Düse 8 bzw. der Düsenkopf hat mindestens eine, vorzugsweise mehrere Öffnungen zum Auslassen des Wasserdampfes.

Die einzige Figur zeigt weiter, dass eine Aufnahme 9 zum Positionieren eines die aufzuschäumende Eimasse 10 enthaltenden Behältnisses 11 vorgesehen ist. Im einfachsten Falle handelt es sich bei der Aufnahme 9 um einen Tisch im Sinne einer Plattform, der in vorteilhafter Weise höhenverstellbar ist, um nämlich das darauf stehenden Behältnis 11 so zu positionieren, dass die Düse 8 der Lanze 7 innerhalb der im Behältnis 11 befindlichen Eimasse 10 positioniert ist.

Des Weiteren ist in der einzigen Figur angedeutet, dass die Vorrichtung eine Steuer-/Regelungseinrichtung 12 umfasst, nämlich zur Steuerung/Regelung des durch Wasserdampf bedingten Garprozesses. Dies bedeutet, dass entsprechend der zu garenden Menge an Eimasse insbesondere die Behandlungsdauer durch eine entsprechende Zeitsteuerung vorgebbar ist.

Die Steuer-/Regelungseinrichtung kann des Weiteren ein Kommunikationsmodul 13 umfassen, welches über einen LAN- und/oder WLAN- und/oder Bluetooth-Anschluss zur Datenkommunikation dient, wobei dies vorzugsweise per Bluetooth-Anbindung an ein in der Figur lediglich angedeutetes Smartphone 14 erfolgen kann.

Ungeachtet des zuvor erörterten grundsätzlichen Aufbaus einer erfindungsgemäßen Vorrichtung sei angemerkt, dass die Aufnahme 9 zur exakten Positionierung des Behältnisses 11 beliebig schwenkbar und/oder höhenverstellbar sein kann.

Zur Energieversorgung kann ein herkömmlicher 220 Volt-Anschluss 15 dienen. Ebenso ist es denkbar, die Vorrichtung über einen integrierten aufladbaren Akku und/oder über Solarzellen mit Energie zu versorgen.

Ein in der Figur lediglich angedeutetes Display 16 kann im einfachsten Falle eine LED-Anzeige oder Volltext-Informationen umfassen, beispielsweise mit dem Informationsgehalt, dass die Maschine heizt, dass die Heizphase beendet ist, dass die Maschine betriebsbereit ist, dass der Prüfvorgang läuft und dass das Rührei durch Dampfgaren fertiggestellt ist.

Außerdem kann über das Display 16 bzw. Bedienknöpfe oder über ein Touch-Panel die Programmauswahl erfolgen, wobei auf dem Display 16 Kalorien oder ein Essen-Tracker, etc. integriert sein kann.

Schließlich sei angemerkt, dass sich die voranstehenden Ausführungen auf den grundsätzlichen Aufbau einer erfindungsgemäßen Vorrichtung zur fettfreien Zubereitung portionierter Mengen an Rührei oder Rühreivarianten durch Aufschäumen beziehen, wobei auf die Darstellung sekundärer Bauteile - bewusst - verzichtet worden ist. Diese unterscheiden sich nicht oder nur unwesentlich von denen einer Kaffeemaschine mit einem Aufschäumer, so dass darauf Bezug genommen wird.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebenen Ausführungsbeispiel der erfindungsgemäßen Vorrichtung lediglich zur Erörterung der beanspruchten Lehre dient, dieses jedoch nicht auf das Ausführungsbeispiel einschränkt.

### Bezugszeichenliste

- 1: Gehäuse
- 2: Dampfgenerator
- 3: Wassertank
- 4: Pumpe
- 5: Überdruckventil
- 6: Dampf-Auslassleitung
- 7: Lanze
- 8: Düse
- 9: Aufnahme für das Behältnis
- 10: Eimasse
- 11: Behältnis
- 12: Steuer-/Regelungseinrichtung
- 13: Kommunikations-Modul
- 14: Smartphone, angedeutet
- 15: Starkstromanschluss (z.B. 220 Volt-Anschluss)
- 16: LED-Anzeige, Display

## Patentansprüche

1. Vorrichtung zur fettfreien Zubereitung portionierter Mengen an Rührei oder Rühreivarianten durch Aufschäumen von Eimasse, insbesondere Frischei, Vollei bzw. Flüssigei oder vorgefertigter Eimixturen mit Gewürzen und Zutaten, mit
- einem Gehäuse,
- einem im Gehäuse angeordneten elektrischen Dampfgenerator,
- einem mit dem Dampfgenerator strömungsverbundenen, innerhalb oder außerhalb des Gehäuses angeordneten Anschluss an eine Wasserquelle oder einem Wassertank,
- einer vorzugsweise im Strömungspfad zwischen der Wasserquelle bzw. dem Wassertank und dem Dampfgenerator angeordneten elektrischen Pumpe,
- vorzugsweise einem Überdruckventil,
- mindestens einer außerhalb des Gehäuses angeordneten Lanze mit endseitiger Düse zum Entladen des im Dampfgenerator erzeugten Wasserdampfes in ein die portionierte Eimasse enthaltendes Behältnis, und
- einer Steuer-/Regelungseinrichtung zur Temperatur- Druck- und Zeitsteuerung oder entsprechenden Regelung.

2. Vorrichtung nach Anspruch 1, **dadurch gekennzeichnet, dass** die Lanze am freien Ende oder nahe dem freien Ende mindestens eine Öffnung, vorzugsweise mehrere über den Umfang der Lanze verteilte Öffnungen, hat.

3. Vorrichtung nach Anspruch 1 oder 2, **dadurch gekennzeichnet, dass** mehrere Lanzen mit unterschiedlich gestalteten Düsen zum Austausch vorgesehen sind.

4. Vorrichtung nach einem der Ansprüche 1 bis 3, **dadurch gekennzeichnet, dass** die Lanze zumindest teilweise mit einer temperaturbeständigen Anti-Haft-Beschichtung versehen ist.

5. Vorrichtung nach einem der Ansprüche 1 bis 4, **dadurch gekennzeichnet, dass** unterhalb der Lanze ein Halter zum Positionieren und/oder Halten des Behältnisses vorgesehen ist.

6. Vorrichtung nach einem der Ansprüche 1 bis 5, **dadurch gekennzeichnet, dass** das Behältnis in Form eines Bechers per Schraub- oder Bajonettanschluss hängend unter bzw. teilweise um die Lanze herum positionierbar ist.

7. Vorrichtung nach einem der Ansprüche 1 bis 6, **dadurch gekennzeichnet, dass** außerhalb oder innerhalb des Gehäuses ein Tank zur Bevorratung und zum Dosieren der Eimasse vorgesehen ist.

8. Vorrichtung nach Anspruch 7, **dadurch gekennzeichnet, dass** die Masse der in das Behältnis dosierten Eimasse und vorzugsweise die diesbezüglichen Kalorien auf einem Display anzeigbar ist/sind.

9. Vorrichtung nach einem der Ansprüche 1 bis 8, **dadurch gekennzeichnet, dass** innerhalb oder außerhalb des Gehäuses ein Spender für Salz, Pfeffer und ggf. für weitere Gewürze vorgesehen ist, der nach Wahl der zu dosierenden Menge, vor der Dampfbehandlung, unmittelbar in das Behältnis hinein dosiert.

10. Vorrichtung nach einem der Ansprüche 1 bis 9, **dadurch gekennzeichnet, dass** der jeweilige/momentane Betriebszustand, Wasserstand, etc. visuell und/oder akustisch, vorzugsweise über LEDs und/oder ein Display, angezeigt wird.

11. Vorrichtung nach einem der Ansprüche 1 bis 10, **dadurch gekennzeichnet, dass** voreingestellte Bearbeitungsparameter umfassende Programme über Tasten und/oder ein Display, vorzugsweise über ein Touch-Panel, auswählbar sind.

12. Vorrichtung nach, **dadurch gekennzeichnet, dass** ein Prozessor, ein Datenspeicher und ein Kommunikationsmodul mit Netzwerkanschluss, insbesondere für einen LAN- und/oder WLAN- und/oder Bluetooth- Anschluss zur Datenkommunikation, insbesondere über das Internet und vorzugsweise über ein Smartphone, vorgesehen sind.

13. Vorrichtung nacheinem der Ansprüche 1 bis 12, **dadurch gekennzeichnet, dass** der Prozessor ein Programm zur Lagerhaltung aller Verbrauchsmaterialien, insbesondere der Eimasse, umfasst, über das ein automatisches Bestellwesen der Verbrauchsmaterialien, vorzugsweise über das Internet, aktivierbar ist.

14. Vorrichtung nach einem der Ansprüche 1 bis 13, **dadurch gekennzeichnet, dass** das Gehäuse in etwa die Form eines Eis hat.
